# EUROPEAN PATENT APPLICATION

(11) **EP 4 556 531 A1**
(43) Date of publication of application: **21.05.2025**
(21) Application number: 23839522.2
(22) Date of filing: 04.07.2023
(51) Int. Cl.: C08L 101/10, C08K 3/013, C08K 5/17, C08K 5/5425, C09J 201/10, C09K 3/10

(54) **TWO-COMPONENT TYPE ROOM TEMPERATURE RAPID-CURABLE RESIN COMPOSITION AND ARTICLE**

(30) Priority: 14.07.2022 JP 2022112829
(71) Applicant: SHIN-ETSU CHEMICAL CO., LTD., Tokyo 1000005 (JP)
(72) Inventor: UTA Akira, Annaka-shi, Gunma 379-0224 (JP)
(74) Representative: Mewburn Ellis LLP
(86) International application number: PCT/JP2023/024712
(87) International publication number: WO 2024/014350

(57) **Abstract**

This two-component type room temperature rapid-curable resin composition comprises, at a specific ratio: a first agent containing, at a specific ratio,
(A) an organic polymer in which the molecule chain terminals are blocked by a hydrolysable silyl group and/or a hydroxyl silyl group, and in which an organopolysiloxane structure is not included in the polymer main chain,
(B) a hydrolyzable organosilane compound represented by formula (1) 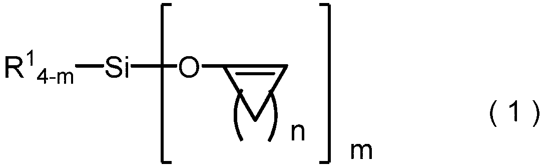 (in formula (1), R¹ represents a monovalent hydrocarbon group, n represents 1-8, and
m represents 3 or 4) and/or a partial hydrolysis condensate thereof, and

(C) a curing catalyst; and a second agent containing
(A') an organic polymer in which the molecule chain terminals are blocked by a hydrolysable silyl group and/or a hydroxyl silyl group, and in which an organopolysiloxane structure is not included in the polymer main chain. The two-component type room temperature rapid-curable resin composition has excellent rapid curability and deep curability, provides fine workability, and, when being cured, causes elimination/release of a cyclic ketone compound such as cyclobutanone and cyclopentanone as a leaving group (elimination compound). Thus, the composition solves problems regarding safety and hazardous properties with respect to human and the environment.

## Description

### TECHNICAL FIELD

This invention relates to a two-pack room temperature (RT) fast-curing resin composition of condensation cure type, comprising an organic polymer which is capped at a molecular chain end with a hydrolyzable silyl group and/or hydroxysilyl group (i.e., silyl group having a silicon-bonded hydroxy group or silanol group) and whose backbone is free of an organopolysiloxane structure as a base polymer wherein two packs are separately stored and the composition crosslinks or cures through hydrolytic condensation reaction at RT (23±15°C) with the aid of airborne moisture or water after mixing of two packs; more particularly, to a two-pack RT fast-curing resin composition wherein the crosslinking or curing agent releases or generates a leaving compound through hydrolytic condensation reaction upon curing or crosslinking, which compound is a cyclic ketone compound such as cyclobutanone or cyclopentanone, the composition effectively cures through condensation reaction, into a highly adhesive cured rubber product other than an organopolysiloxane resin such as silicone rubber; and a variety of articles comprising the composition or a cured product thereof.

### BACKGROUND ART

A polymer having a reactive silicon group (referred to as "hydrolyzable silyl group," hereinafter) hydrolyzes and condenses in the presence of water, while a silicon group having a hydroxy group on the silicon atom (referred to as "hydroxysilyl or silanol group," hereinafter) condenses with a hydrolysis product of the hydrolyzable silyl group or a silanol group. An organic polymer which is capped at a molecular chain end with a hydrolyzable silyl group and/or hydroxysilyl group and whose backbone is free of an organopolysiloxane structure is generally referred to as modified silicone polymer for the reason that although the backbone does not contain repeating structures of organosiloxane (organopolysiloxane structure), the polymer has a reactive silyl group at a molecular chain end and forms a siloxane structure only at the crosslinking point upon curing. Since this polymer crosslinks and cures in the presence of moisture, it can be used as a curable resin composition. A RT curable resin composition comprising the aforementioned organic polymer whose backbone is free of an organopolysiloxane structure as a base polymer is characterized in that it is liquid or paste at RT (23±15°C) and cures into a rubbery elastomer. For making good use of these characteristics, the composition is widely utilized as adhesives, sealing agents, potting agents, and coating agents used in vehicle parts, electric and electronic parts, building structures, civil engineering structures, and the like.

The composition which cures through condensation reaction contains a curing or crosslinking agent which has a hydrolyzable group. Known examples of the curing agent which is widely utilized in the art include agents of deoximation type which release oxime compounds such as 2-butanoneoxime upon curing and agents of dealcoholization type which release alcohol compounds such as methanol upon curing.

Meanwhile, the oxime compounds such as 2-butanoneoxime which are released from the curing agents of deoximation type upon curing are suspected to be carcinogenic. The alcohol compounds such as methanol which are released from the curing agents of dealcoholization type upon curing are toxic to the human body, designated as dangerous drugs, and thus unfavorable from the aspect of human health. Some compositions use, as the curing catalyst, tin catalysts on which stricter regulations are imposed as the environmental load chemicals. These compositions are unfavorable from the aspect of environment conservation.

Of the foregoing compositions, RT curable resin compositions of one pack type which starts curing reaction upon contact with airborne water are easy to handle because troublesome steps of metering and mixing the base polymer, crosslinker, catalyst and the like immediately before use are eliminated, but have the drawbacks of a low curing speed and poor deep-section cure.

In contrast, RT curable resin compositions of two pack type have a high curing speed and satisfactory deep-section cure. The composition is prepared separately as a main pack comprising a polymer capped at a molecular chain end with a silanol group and/or hydrolyzable silyl group, an inorganic filler and the like, and a crosslinking pack. These packs are dividedly stored in separate containers and mixed on use. See Patent Document 1: JP-A H11-246780 and Patent Document 2: JP-A 2013-204020. While a large amount of the crosslinking agent is added in the RT curable resin compositions of one pack type for gaining a storage life, the compositions of two pack type allow the amount of the crosslinking agent to be reduced and cured products thereof have good physical properties on elongation.

However, since the gas given off upon curing is methanol as in the prior art and tin catalysts are sometimes used, the prior art compositions fail to mitigate the toxicity and environmental load of the leaving group and catalyst.

### PRIOR ART DOCUMENTS

### PATENT DOCUMENTS

Patent Document 1: JP-A H11-246780
Patent Document 2: JP-A 2013-204020
Patent Document 3: JP-A 2017-203065

### SUMMARY OF INVENTION

### TECHNICAL PROBLEM

An object of the invention, which has been made under the above-mentioned circumstances, is to provide a RT-curable resin composition comprising as a base polymer an organic polymer which is capped at a molecular chain end with a hydrolyzable silyl group and/or hydroxysilyl group and whose backbone is free of an organopolysiloxane structure, specifically a RT fast-curing resin composition of two pack type having advantages including fast cure and excellent deep-section cure, comprising a crosslinking agent having a leaving group (or leaving compound) such as a cyclic ketone compound with a relatively high flash point, typically cyclobutanone or cyclopentanone, with respect to which no reports about human health toxicity (e.g., carcinogenicity or teratology) and environmental toxicity like hydrobiological toxicity are found; an article comprising the composition; and a shaped product of an elastomer obtained by curing the composition.

### SOLUTION TO PROBLEM

Making extensive investigations to attain the above object, the inventor has found that a two-pack RT fast-curing resin composition comprising a first pack containing (A) an organic polymer which is capped at a molecular chain end with a hydrolyzable silyl group and/or hydroxysilyl group and whose backbone is free of an organopolysiloxane structure, (B) a hydrolyzable organosilane compound having the general formula (1) and/or a partial hydrolytic condensate thereof, and (C) a curing catalyst in a specific proportion, and a second pack containing (A') a specific amount of an organic polymer which is capped at a molecular chain end with a hydrolyzable silyl group and/or hydroxysilyl group and whose backbone is free of an organopolysiloxane structure is more effectively curable than a one-pack RT curable resin composition, releases or gives off a cyclic ketone compound, typically cyclobutanone or cyclopentanone as a leaving group (or leaving compound), and solves the problem of toxicity or safety to the human body and environment. 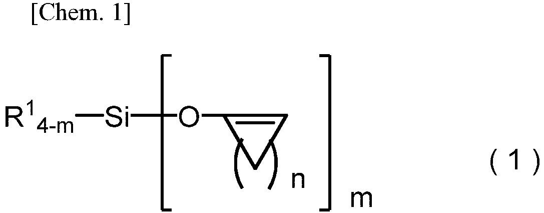 Herein R¹ is a C₁-C₁₀ monovalent hydrocarbon group, n is an integer of 1 to 8, and m is 3 or 4.

The two-pack RT fast-curing resin composition of the invention is designed such that, when the composition is stored dividedly as the first and second packs, the crosslinking agent as component (B) coexists only with component (A) in the first pack among the overall base polymer. Then the amount of the crosslinking agent necessary for acquiring storage stability can be reduced to nearly the minimum amount which is necessary and sufficient for crosslinking of the overall base polymer (i.e., the total amount of base polymer after mixing of two packs), as compared with a one-pack RT curable resin composition. Then curing reaction runs at a relatively high speed than the one-pack RT curable resin composition, that is, cure behavior (fast cure and deep-section cure) is improved. Preferably, an organic compound having a primary amino group is added as a cure accelerator. Then ketimine reaction takes place between a cyclic ketone compound resulting from hydrolysis of component (B) and the primary amino group-containing organic compound as component (D) at the initial stage of curing after mixing of two packs, to create water within the system, with which hydrolytic condensation reaction is promoted. As a result, cure behavior (fast cure and deep-section cure) is improved over the one-pack RT curable resin composition.

The above-discussed problem of cure is solved by using the hydrolyzable organosilane compound having a leaving group in the form of a cyclic ketone compound with a relatively high flash point, typically cyclobutanone or cyclopentanone with respect to which no reports about human health toxicity (e.g., carcinogenicity or teratology) and environmental toxicity like hydrobiological toxicity are found, and/or partial hydrolytic condensate thereof as a crosslinking agent, as component (B) and the organic compound having a primary amino group as component (D). Then, ketimine reaction takes place between the cyclic ketone compound resulting from hydrolysis of component (B) and the primary amino group-containing organic compound as component (D) at the initial stage of curing after mixing of two packs, to create water from within the system. A fully fast-curing composition is obtained. Furthermore, since the two-pack RT fast-curing resin composition achieves fast cure at an equivalent level to tin catalyst-containing compositions without the need for tin catalysts, it solves the problem of toxicity or safety to the human body and environment. The invention is predicated on this finding.

Accordingly, the invention provides a two-pack RT fast-curing resin composition, and a variety of articles (e.g., vehicle parts, electric and electronic parts, building structures, civil engineering structures, adhesives, sealing agents, potting agents, and coating agents) comprising the composition or a cured product thereof.
[1] A two-pack room temperature (RT) fast-curing resin composition comprising
   a first pack containing
   (A) 10 to 90 parts by weight of an organic polymer which is capped at a molecular chain end with a hydrolyzable silyl group and/or hydroxysilyl group and whose backbone is free of an organopolysiloxane structure, the total amount of components (A) and (A') being 100 parts by weight,
   (B) a hydrolyzable organosilane compound having the general formula (1): 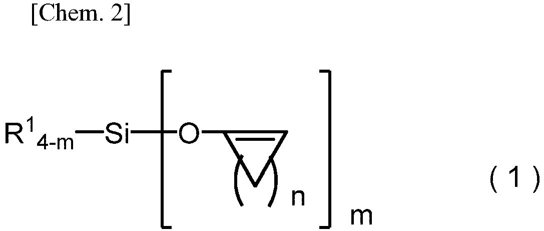
      wherein R¹ is a C₁-C₁₀ monovalent hydrocarbon group, n is an integer of 1 to 8, and
      m is 3 or 4, and/or
         a partial hydrolytic condensate thereof, in an amount of 1 to 30 parts by weight per 100 parts by weight of components (A) and (A') combined, and
   (C) a curing catalyst in an amount of 0.01 to 5 parts by weight per 100 parts by weight of components (A) and (A') combined, and
      a second pack containing
      (A') 10 to 90 parts by weight of an organic polymer which is capped at a molecular chain end with a hydrolyzable silyl group and/or hydroxysilyl group and whose backbone is free of an organopolysiloxane structure, the total amount of components (A) and (A') being 100 parts by weight.
[2] The resin composition of [1], further comprising (D) a cure accelerator in the form of a primary amino group-containing organic compound, each of the first and second packs containing 0 to 5 parts by weight of the primary amino group-containing organic compound per 100 parts by weight of components (A) and (A') combined, at least one of the first and second packs containing 0.1 part by weight or more of the organic compound.
[3] The resin composition of [1] or [2] wherein the hydrolyzable organosilane compound and/or partial hydrolytic condensate thereof as component (B) releases a cyclic ketone compound upon hydrolysis.
[4] The resin composition of [3] wherein the released cyclic ketone compound is cyclobutanone or cyclopentanone.
[5] The resin composition of any one of [1] to [4] wherein the organic polymers as components (A) and (A') have a number average molecular weight of 2,000 to 50,000.
[6] The resin composition of any one of [1] to [5] wherein the curing catalyst (C) does not contain a tin catalyst.
[7] The resin composition of any one of [1] to [6], further comprising (E) an inorganic filler, each of the first and second packs containing 0 to 1,000 parts by weight of the inorganic filler per 100 parts by weight of components (A) and (A') combined, at least one of the first and second packs containing 0.1 part by weight or more of the inorganic filler.
[8] The resin composition of [7] wherein component (E) is at least one inorganic filler selected from calcium carbonate, fumed silica, precipitated silica, carbon black and aluminum oxide.
[9] The resin composition of any one of [1] to [8], further comprising (F) an adhesion promoter, each of the first and second packs containing 0 to 5 parts by weight of the adhesion promoter per 100 parts by weight of components (A) and (A') combined, at least one of the first and second packs containing 0.1 part by weight or more of the adhesion promoter.
[10] The resin composition of any one of [1] to [9] wherein the first and second packs are blended in a weight ratio of 1:1 to 10:1.
[11] A vehicle part comprising a cured product of the two-pack RT fast-curing resin composition of any one of [1] to [10].
[12] An electric/electronic part comprising a cured product of the two-pack RT fast-curing resin composition of any one of [1] to [10].
[13] A building structure comprising a cured product of the two-pack RT fast-curing resin composition of any one of [1] to [10].
[14] A civil engineering structure comprising a cured product of the two-pack RT fast-curing resin composition of any one of [1] to [10].
[15] An adhesive agent comprising the two-pack RT fast-curing resin composition of any one of [1] to [10].
[16] A sealing agent comprising the two-pack RT fast-curing resin composition of any one of [1] to [10].
[17] A potting agent comprising the two-pack RT fast-curing resin composition of any one of [1] to [10].
[18] A coating agent comprising the two-pack RT fast-curing resin composition of any one of [1] to [10].

### ADVANTAGEOUS EFFECTS OF INVENTION

The two-pack RT fast-curing resin composition of the invention is of two-pack type, that is, consists of a first pack and a second pack. The composition is improved in fast cure and deep-section cure after mixing of the first and second packs.

The two-pack RT fast-curing resin composition is excellent in fast cure at RT in air and efficient to work. The two-pack RT fast-curing resin composition rapidly cures after the first and second packs are mixed and exposed to air, achieving excellent physical properties. Furthermore, the two-pack RT fast-curing resin composition uses the crosslinking agent which releases a cyclic ketone compound having a relatively high flash point, typically cyclobutanone or cyclopentanone as the leaving group (leaving substance), with respect to which no reports about human health toxicity (e.g., carcinogenicity or teratology) and environmental toxicity like hydrobiological toxicity are found. Since the composition cures without the need for tin catalysts, it is advantageously used as various adhesives, sealing agents, potting agents, and coating agents, with full care for the human health and safety and environmental conservation (load reduction).

### DESCRIPTION OF EMBODIMENTS

Now the invention is described in detail.

### <Two-pack RT fast-curing resin composition>

The invention provides a two-pack RT fast-curing resin composition consisting of a first pack containing specific amounts of components (A), (B) and (C) and a second pack containing component (A'), which are described below. The second pack contains neither component (B) nor component (C).

The components are described in detail. As used herein, the viscosity is as measured at 23°C by a rotational viscometer according to the method of JIS Z-8803. The room temperature (RT) of the two-pack RT fast-curing resin composition refers to a state at temperature 23±15°C and humidity 50±5% RH.

### [Components (A) and (A'): organic polymer]

An organic polymer which is capped at a molecular chain end with a hydrolyzable silyl group and/or hydroxysilyl group (i.e., silyl group having a hydroxy group bonded to a silicon atom or silanol group) and whose backbone is free of an organopolysiloxane structure, which is sometimes referred to as "modified silicone polymer," is used as components (A) and (A') herein. Component (A) is blended in the first pack while component (A') is blended in the second pack. Components (A) and (A') both function as a base polymer in the two-pack RT fast-curing resin composition of the invention. The modified silicone polymer as components (A) and (A') may have a short-chain siloxane structure (preferably diorganosiloxane structure consisting of about 2 to 5 repeating units) in the linking section (or linker) for linking the silyl group at the molecular chain end and the backbone. That is, the modified silicone polymer as components (A) and (A') is preferably free of a long-chain siloxane structure consisting of 6 or more repeating units in the linking section (or linker) for linking the silyl group at the molecular chain end and the backbone. That is, the modified silicone polymer may contain a short-chain siloxane structure consisting of 2 to 5 repeating diorganosiloxane units in the linking section (or linker) adjoining the silyl group at the molecular chain end as long as it is an organic polymer whose backbone does not contain an organopolysiloxane structure.

As the base polymer defined herein, any organic polymer may be used without limiting the backbone structure as long as the polymer is capped at a molecular chain end with a hydrolyzable silyl group (e.g., alkoxysilyl group) and/or hydroxysilyl group (i.e., silanol group) and does not contain an organopolysiloxane structure in its backbone. Especially, polymers whose backbone has a polymer structure including polyoxyalkylene such as polypropylene oxide, polyethylene oxide, polyisobutylene oxide, or propylene oxide-ethylene oxide copolymers, polyalkylene such as polyisobutylene, or polyacrylate or polymethacrylate are preferred in view of availability, while their backbone structure may partially have a urethane structure (-NHC(=O)O-) or ester structure (-C(=O)O-).

Preferred examples of the organic polymer which is capped at a molecular chain end with a hydrolyzable silyl group and/or hydroxysilyl group (i.e., silanol group) and whose backbone is free of an organopolysiloxane structure, i.e., modified silicone polymer, as components (A) and (A') include silylated oxyalkylene polymers, silylated urethane polymers, silylated acrylate polymers, and silylated alkylene polymers.

Examples of the silylated oxyalkylene polymer include polymers whose backbone consists of a polyoxyalkylene structure such as polypropylene oxide, polyethylene oxide, or propylene oxide-ethylene oxide copolymers, and which are capped at a molecular chain end, especially both molecular chain ends with a hydrolyzable silyl group and/or silanol group, i.e., polyether-modified silicone polymers.

Examples of the silylated urethane polymer include polymers whose backbone consists of a polyoxyalkylene structure such as polypropylene oxide, polyethylene oxide, or propylene oxide-ethylene oxide copolymers, and which have a urethane bond structure (-NHC(=O)O-) to isocyanate as part of the backbone structure and are capped at a molecular chain end, especially both molecular chain ends with a hydrolyzable silyl group and/or silanol group, i.e., urethane-modified silicone polymers.

Examples of the silylated acrylate polymer include polymers whose backbone consists of a polyacrylate or polymethacrylate structure and which are capped at a molecular chain end, especially both molecular chain ends with a hydrolyzable silyl group and/or silanol group, i.e., acrylate-modified silicone polymers.

Examples of the silylated alkylene polymer include polymers whose backbone consists of a polyalkylene structure such as polymer of isobutylene monomer and which are capped at a molecular chain end, especially both molecular chain ends with a hydrolyzable silyl group and/or silanol group, i.e., alkylene-modified silicone polymers.

Of the foregoing polymers, silylated oxypropylene polymers of polypropylene oxide backbone which are capped at both molecular chain ends with a hydrolyzable silyl group and/or silanol group and silylated acrylate polymers of polyacrylate backbone which are capped at both molecular chain ends with a hydrolyzable silyl group and/or silanol group are preferred in view of availability, with the silylated oxypropylene polymers of polypropylene oxide backbone which are capped at both molecular chain ends with a hydrolyzable silyl group and/or silanol group being more preferred.

Since a polymer capped at a molecular chain end with a silanol group is preferred from the aspects of fast cure and deep-section cure, silylated oxypropylene polymers of polypropylene oxide backbone which are capped at both molecular chain ends with a silanol group are especially preferred.

Of the organic polymers as components (A) and (A'), organic polymers which are capped at both molecular chain ends with a hydrolyzable silyl group and/or hydroxysilyl group (i.e., silyl group having a hydroxy group bonded to a silicon atom or silanol group), represented by the general formula (2) or (3) are more preferred. 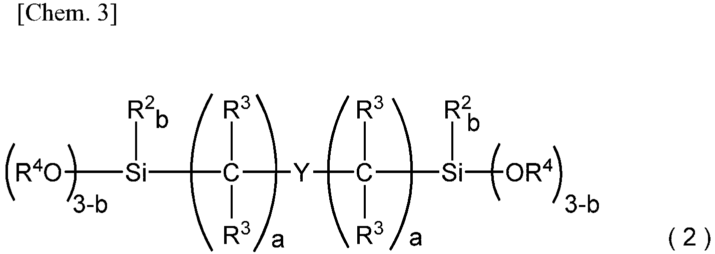 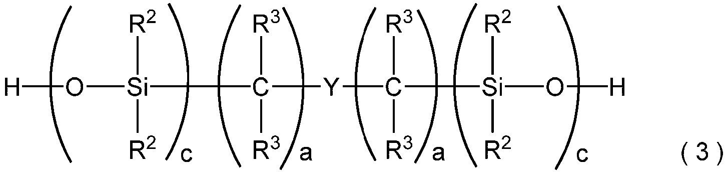 Herein R² and R⁴ which may be the same or different each are a C₁-C₁₀ substituted or unsubstituted monovalent hydrocarbon group, R³ is each independently a C₁-C₁₀ substituted or unsubstituted monovalent hydrocarbon group or hydrogen, "a" is each independently an integer of 2 or more, b is 0, 1 or 2 for each bonded-silicon atom, c is independently an integer of 1 to 5, and Y is a divalent organic group free of a siloxane structure.

In formulae (2) and (3), R² and R⁴ each are a C₁-C₁₀, preferably C₁-C₆ substituted or unsubstituted monovalent hydrocarbon group. R³ is a C₁-C₁₀, preferably C₁-C₆ substituted or unsubstituted monovalent hydrocarbon group or hydrogen. Examples of the C₁-C₁₀, preferably C₁-C₆ substituted or unsubstituted monovalent hydrocarbon group represented by R², R³ and R⁴ include alkyl groups such as methyl, ethyl, n-propyl, isopropyl, n-butyl, isobutyl, tert-butyl, pentyl, neopentyl, hexyl, heptyl and octyl; cycloalkyl groups such as cyclopentyl and cyclohexyl; alkenyl groups such as vinyl, allyl, propenyl, isopropenyl, butenyl, pentenyl, and hexenyl; aryl groups such as phenyl, tolyl, xylyl, α-naphthyl and β-naphthyl; aralkyl groups such as benzyl, 2-phenylethyl, and 3-phenylpropyl; and substituted forms of the foregoing groups in which some or all of the hydrogen atoms are substituted by a halogen atom such as F, Cl or Br, or cyano group, e.g., 3-chloropropyl, 3,3,3-trifluoropropyl and 2-cyanoethyl. R² and R⁴ are preferably methyl or phenyl, most preferably methyl. R³ is preferably methyl, ethyl or hydrogen, most preferably methyl or hydrogen. R², R³ and R⁴ may be the same or different.

In formulae (2) and (3), "a" is each independently an integer of 2 or more, preferably an integer of 2 to 8, more preferably 2, 3 or 4, most preferably 3.

In formula (2), b is 0, 1 or 2 independently for each bonded-silicon atom, preferably 0 or 1, most preferably 1.

In formula (3), c is independently an integer of 1 to 5, preferably an integer of 1 to 4.

In formulae (2) and (3), Y is a divalent organic group free of a siloxane structure. Examples of the organic group include polyoxyalkylene groups such as polyoxyethylene, polyoxypropylene or polyoxybutylene, polyalkylene groups such as polyisobutylene, methyl methacrylate polymers having the formula shown below, and the foregoing groups which is intervened by at least one moiety selected from alkylene moiety, ether-bonding oxygen atom, amide bond, urethane bond, carbonyl bond, and ester bond. 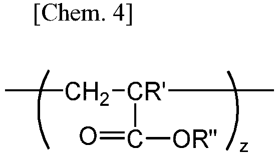 Herein R' is hydrogen or methyl, R" is a C₁-C₁₀ alkyl group such as methyl, ethyl, n-propyl, isopropyl, n-butyl, isobutyl, tert-butyl, pentyl, neopentyl, or hexyl, and z indicative of the degree of polymerization of repeating units of which the backbone is composed is an integer of 20 to 800.

Examples of the organic polymer as components (A) and (A') include the following structures. 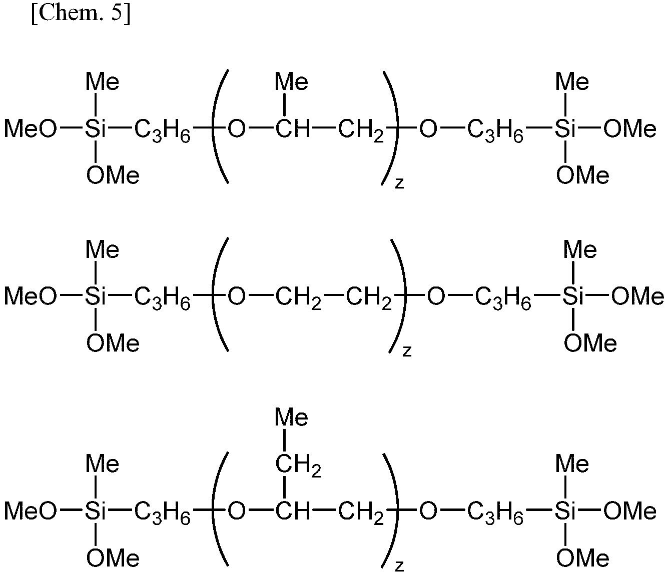 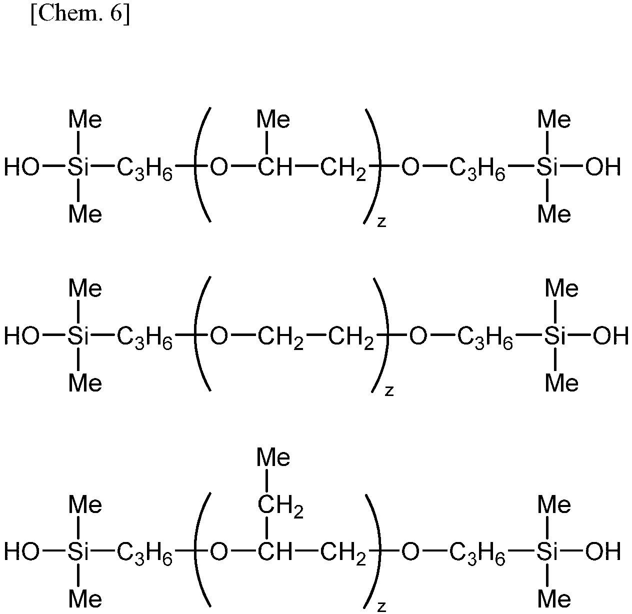 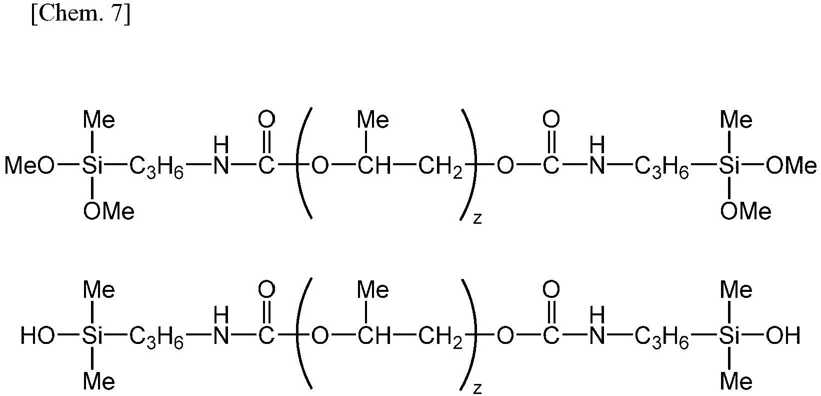 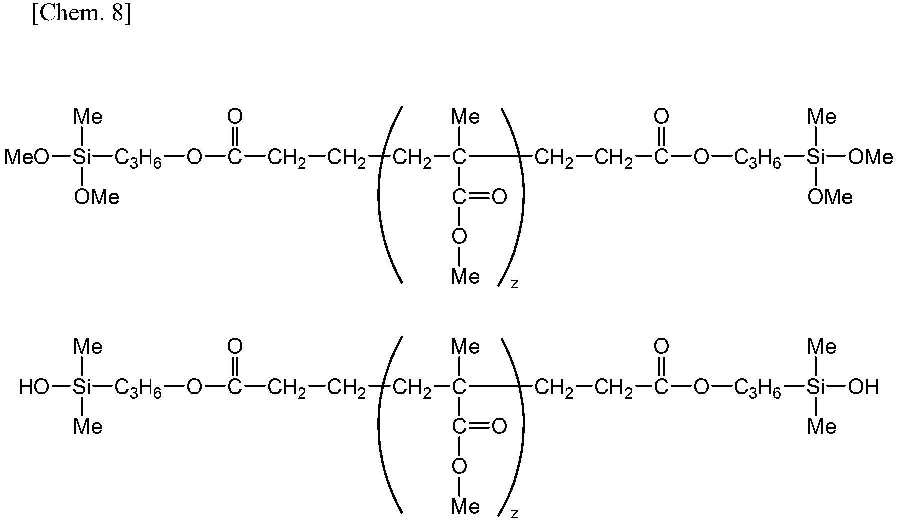 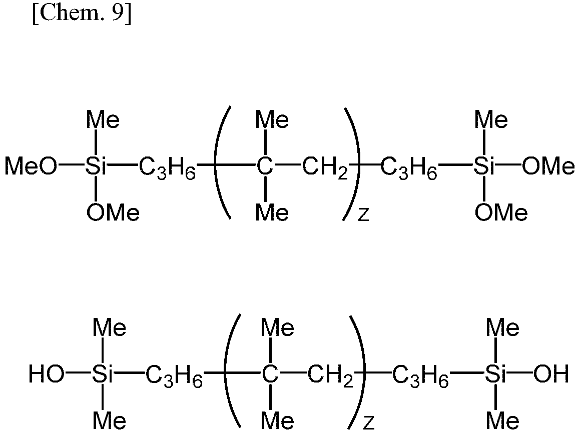 Herein z indicative of the degree of polymerization of repeating units of which the backbone is composed is an integer of 20 to 800. Me stands for methyl.

It is noted that in the exemplary formulae, the methoxy group (MeO-) at the molecular chain end may be substituted by a lower alkoxy group such as ethoxy, and the hydroxydimethylsilyl group (-SiMe₂OH) at the molecular chain end may be substituted by a hydroxydimethylsilyl-endcapped polydimethylsiloxanyl group (-[Si(Me)₂O]_{c'}-H wherein c' is an integer of 2 to 5).

The organic polymer as components (A) and (A') preferably has a number average molecular weight (Mn) of 2,000 to 50,000, more preferably 5,000 to 40,000, even more preferably 10,000 to 35,000. With too low a Mn, the resulting cured product is sometimes aggravated in rubber physical properties such as elongation and strength. With too high a Mn, the composition sometimes experiences a sharp rise of viscosity, which is detrimental in view of handling.

As used herein, the molecular weight or degree of polymerization (DOP) can be determined as a number average molecular weight or number average DOP or weight average molecular weight or weight average DOP versus polystyrene standards by gel permeation chromatography (GPC) using tetrahydrofuran (THF) or toluene as the developing solvent.

These polymers which are capped at a molecular chain end with a hydrolyzable silyl group and/or hydroxysilyl group (i.e., silanol group) can be obtained by any well-known methods, for example, the method of JP-A 2017-203065 (Patent Document 3). Specifically, a silylated oxypropylene polymer based on a backbone of polypropylene oxide and capped at both molecular chain ends with a silanol group can be prepared by hydrosilation reaction of a polyoxyalkylene polymer, for example, a polyoxypropylene polymer capped at a molecular chain end with an alkenyl group terminated with CH₂=CH-structure such as allyl group with an organosilicon compound having a silanol (SiOH) group and hydrosilyl (SiH) group such as an organosilane or organosiloxane oligomer in the presence of a platinum catalyst. As another preparation method, a silylated oxypropylene polymer can be prepared by hydrosilation reaction of a polyoxyalkylene polymer, for example, a polyoxypropylene polymer capped at a molecular chain end with an alkenyl group terminated with CH₂=CH- structure such as allyl group with an organosilicon compound having a chlorosilyl (SiCl) group and hydrosilyl (SiH) group such as an organosilane or organosiloxane oligomer in the presence of a platinum catalyst and subsequent hydrolytic reaction of the chlorosilyl group into a silanol (SiOH) group.

It is noted that the organic polymer which is capped at a molecular chain end with a hydrolyzable silyl group and/or silanol group and whose backbone is free of an organopolysiloxane structure (modified silicone polymer) as components (A) and (A') may be selected from commercially available products. For example, MS Polymer^{®} by Kaneka Corp. and Geniosil^{®} STP-E by Wacker Chemie AG are available as the polyether-modified silicone polymer, and Geniosil^{®} SPUR/STP-U by Wacker Chemie AG is available as the urethane-modified silicone polymer.

The organic polymer which is capped at a molecular chain end with a hydrolyzable silyl group and/or silanol group as components (A) and (A') may be used alone or if necessary, in admixture of two or more polymers which are different in structure or DOP. The organopolysiloxane as component (A) and the organopolysiloxane as component (A') may be the same or different.

### [Component (B): Hydrolyzable organosilane compound and/or partial hydrolytic condensate thereof]

Component (B) used in the two-pack RT fast-cure resin composition is a hydrolyzable organosilane compound having the general formula (1) shown below and/or a partial hydrolytic condensate thereof. It serves as a crosslinking or curing agent and is characterized by hydrolysis to release a cyclic ketone compound such as cyclobutanone or cyclopentanone as the leaving group (or leaving substance)

As used herein, the "partial hydrolytic condensate" refers to an organosiloxane oligomer resulting from partial hydrolysis and condensation of the hydrolyzable organosilane compound, the oligomer having at least 3, preferably at least 4 residual hydrolyzable groups in the molecule. 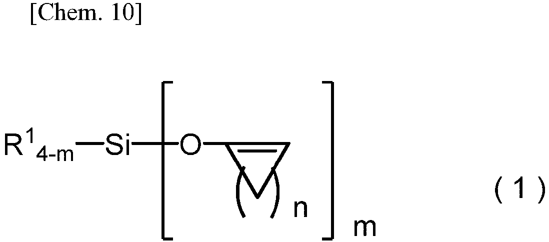 Herein R¹ is a C₁-C₁₀ monovalent hydrocarbon group, n is an integer of 1 to 8, and m is 3 or 4.

In formula (1), R¹ is a C₁-C₁₀, preferably C₁-C₆ monovalent hydrocarbon group, more preferably C₁-C₆ alkyl group, C₂-C₆ alkenyl group, C₆-C₁₀ aryl group, or C₇-C₁₀ aralkyl group. Examples of group R¹ include alkyl groups such as methyl, ethyl, propyl, isopropyl, butyl, isobutyl, sec-butyl, tert-butyl, pentyl, hexyl, octyl, 2-ethylhexyl, nonyl and decyl; alkenyl groups such as vinyl, allyl, propenyl, isopropenyl, butenyl, and hexenyl; aryl groups such as phenyl and tolyl; and aralkyl groups such as benzyl and phenylethyl. Of these, methyl, ethyl, vinyl and phenyl are preferred, with methyl, vinyl and phenyl being more preferred.

In formula (1), n is an integer of 1 to 8, preferably 2 to 6, more preferably 2 to 4, most preferably 2 or 3. If n=0, no cyclic structure forms. If n is an integer of 9 or more, several problems arise, for example, the hydrolyzable organosilane has too high a molecular weight to purify by distillation and must be added in a larger amount to ensure storage stability, which is disadvantageous in cost.

Also, m is 3 or 4. If m is less than 3, the compound does not undergo crosslinking reaction to cure into rubber and is inadequate as the crosslinking agent for the two-pack RT fast-curing resin composition.

Examples of the leaving group (or leaving compound) resulting from hydrolysis of the hydrolyzable organosilane compound having formula (1) include cyclic ketone compounds such as cyclopropanone, cyclobutanone, cyclopentanone, cyclohexanone, cycloheptanone, cyclooctanone, cyclononanone, and cyclodecanone, preferably cyclobutanone and cyclopentanone, more preferably cyclopentanone. With respect to cyclobutanone and cyclopentanone, no reports about human health toxicity (e.g., carcinogenicity or teratology) and environmental toxicity like hydrobiological toxicity are found. In addition, since cyclopentanone is industrially manufactured in a large amount, easily available, and competitive in economy, it is advantageous for the preparation of the hydrolyzable organosilane compound as component (B).

The hydrolyzable organosilane compound as component (B) can be prepared, for example, by reaction (e.g., dehydrochlorination reaction) of a chlorosilane compound corresponding to the product, i.e., the hydrolyzable organosilane compound having formula (1) and a cyclic ketone compound in the presence of a catalyst and a basic substance. This reaction is expressed by the following scheme [1]. 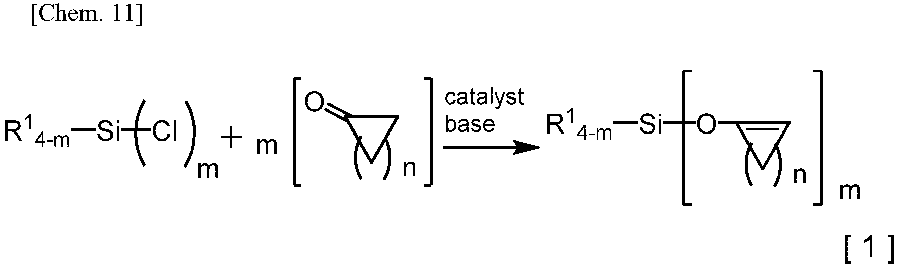 Herein R¹, n and m are as defined above.

Examples of the chlorosilane compound are shown below.

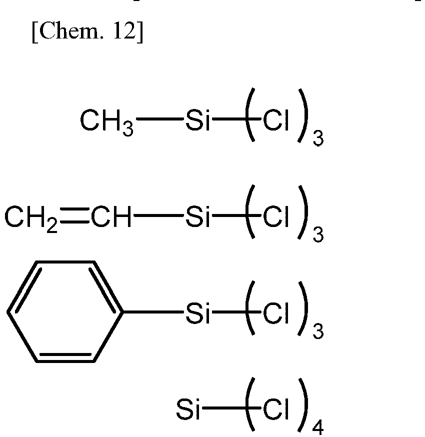

Examples of the cyclic ketone compound are shown below.

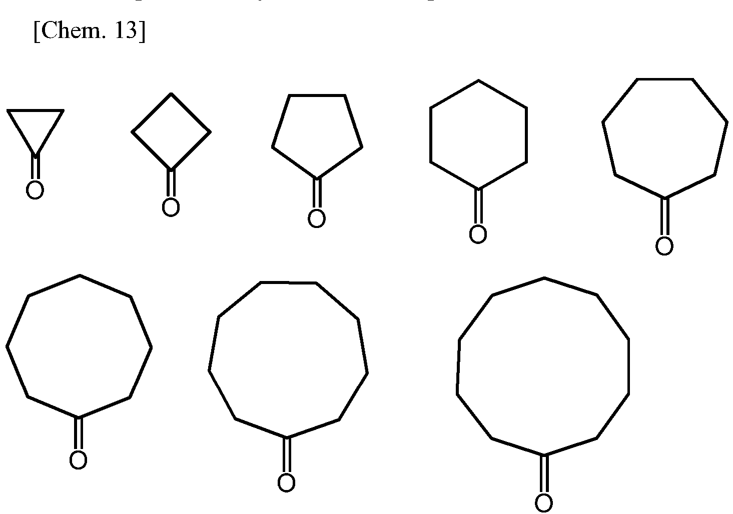

The amount of the cyclic ketone compound added for reaction with the chlorosilane compound is preferably 0.95 to 3.0 moles, more preferably 0.99 to 2.5 moles, even more preferably 1.0 to 2.0 moles per mole of chlorine atom in the chlorosilane compound. If the amount of the cyclic ketone compound added is small, there is a risk that the reaction is not completed. If the amount of the cyclic ketone compound added is too large, a long time may be needed for purification and a long time be needed for preparation.

The catalyst used for the reaction is typically selected from mono- or divalent metal copper compounds. Examples of the copper compound include copper chloride, copper bromide, copper iodide, copper sulfate, copper nitrate, copper carbonate, basic copper carbonate, copper formate, copper acetate, and copper butyrate, but are not limited thereto.

The amount of the catalyst (metal copper compound) added is preferably 0.001 to 0.5 mole, more preferably 0.002 to 0.2 mole, even more preferably 0.003 to 0.1 mole per mole of the chlorosilane compound. If the amount of the catalyst added is small, there is a risk that the reaction is not completed. A too large amount of the catalyst added is economically disadvantageous.

The basic substance used in the reaction is selected from low nucleophilic basic substances such as trimethylamine, triethylamine, tripropylamine, tributylamine, urea, diazabicycloundecene, and diazabicyclononene. Inter alia, trimethylamine, triethylamine, and tributylamine are preferred, with triethylamine being most preferred.

The amount of the basic substance added is preferably 0.95 to 2.5 moles, more preferably 0.99 to 2.0 moles, even more preferably 1.0 to 1.5 moles per mole of chlorine atom in the chlorosilane compound. If the amount of the basic substance added is small, there is a risk that the reaction is not completed. A too large amount of the basic substance added is economically disadvantageous.

In preparing the hydrolyzable organosilane compound as component (B), any of commonly used solvents may be used. Suitable solvents include organic solvents, for example, aromatic hydrocarbons such as toluene, xylene and benzene, aliphatic hydrocarbons such as pentane, hexane, heptane, nonane, octane and decane, ethers such as dimethyl ether, methyl ethyl ether, tetrahydrofuran, and dioxane, halogenated hydrocarbons such as perchloroethane, perchloroethylene, trichloroethane, chloroform and carbon tetrachloride, amides such as dimethylformamide, and esters such as ethyl acetate, methyl acetate, and butyl acetate.

Although the amount of the solvent used is not particularly limited, the solvent is preferably used in an amount of 10 to 500 parts by weight, more preferably 30 to 400 parts by weight, even more preferably 50 to 300 parts by weight per 100 parts by weight of the cyclic ketone compound.

As to the conditions for reaction of the chlorosilane compound with the cyclic ketone compound, the chlorosilane compound is added dropwise to the cyclic ketone compound at a temperature of typically 0 to 120°C, preferably 0 to 100°C and reaction is run at a temperature of typically 50 to 120°C, preferably 60 to 100°C for 1 to 48 hours, preferably 3 to 30 hours. If the reaction temperature is too low, sometimes the reaction is not completed. If the reaction temperature is too high, the product can be substantially colored. If the reaction time is too short, sometimes the reaction is not completed. A too long reaction time adversely affects productivity.

The purification at the end of reaction may be carried out by distilling the target compound in a reduced pressure environment. The reduced pressure is preferably 1×10⁻⁵ to 3,000 Pa, more preferably 1×10⁻⁵ to 2,000 Pa whereas the temperature during purification is preferably 100 to 250°C, more preferably 120 to 230°C. If the reduced pressure is too high, distillation may be difficult. A too low temperature during purification may disturb purification by distillation whereas a too high temperature may cause coloring or decomposition of the reaction product.

Examples of the hydrolyzable organosilane compound as component (B) include compounds of the following formulae. Me stands for methyl.

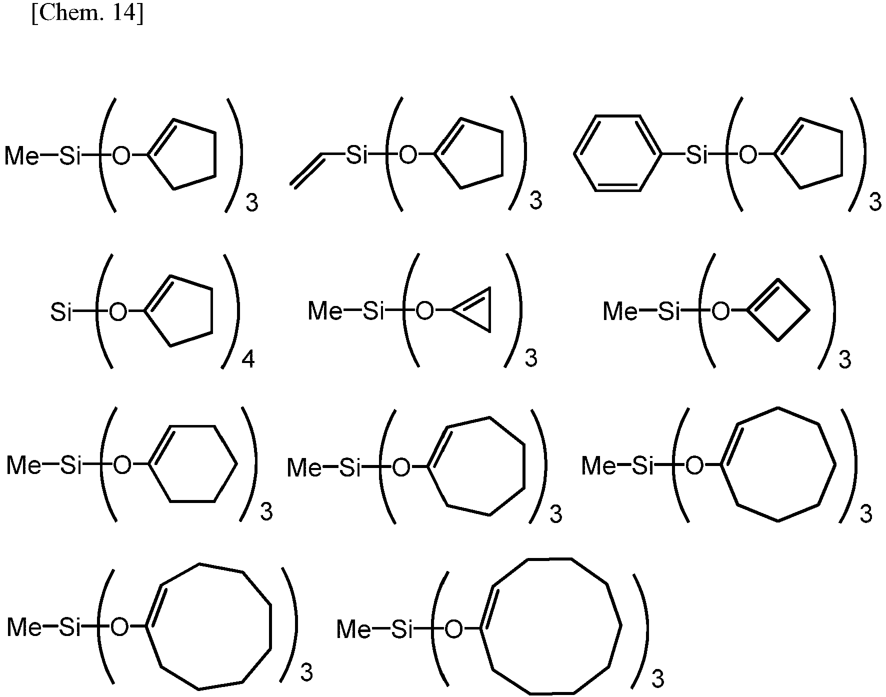

Component (B) may be used alone or in admixture of two or more.

Component (B) is blended in the first pack. The amount of component (B) blended is 1 to 30 parts by weight, preferably 2 to 25 parts by weight per 100 parts by weight of components (A) and (A') combined. If the amount of component (B) blended is too small, the composition may not be fully crosslinked before it is cured. If the amount of component (B) blended is too large, there arises a problem that the cured product (or silicone rubber) has poor mechanical properties or rubber physical properties, which is economically disadvantageous.

### [Component (C): Curing catalyst]

The curing catalyst as component (C) is used to promote the hydrolytic condensation reaction and commonly referred to as curing catalyst. There may be used any of well-known catalysts commonly used in RT curable silicone resin compositions adapted to cure in the presence of moisture.

Non-metal base organic catalysts are included in the curing catalyst as component (C). The non-metal base organic catalyst, though not particularly limited, may be selected from catalysts which are well known as the cure accelerator for condensation-curable organopolysiloxane compositions. Examples include phosphazene compounds such as N,N,N',N',N'',N''-hexamethyl-N‴-(trimethylsilylmethyl)phosphorimidic triamide; quaternary ammonium salts such as benzyltriethylammonium acetate; dialkylhydroxylamines such as dimethylhydroxylamine and diethylhydroxylamine; and γ-(N,N,N',N'-tetramethylguanidyl)propyltrimethoxysilane, γ-(N,N,N',N'-tetramethylguanidyl)propylmethyldimethoxysilane, and γ-(N,N,N',N'-tetramethylguanidyl)-propyltris(trimethylsiloxy)silane. The non-metallic organic catalysts may be used alone or in admixture.

Metal base catalysts are included in the curing catalysts as component (C). The metal base catalyst, though not particularly limited, may be selected from catalysts which are well known as the curing catalyst for condensation-curable organopolysiloxanes. Examples include alkyltin ester compounds (tin catalysts) such as dibutyltin diacetate, dibutyltin dilaurate, dibutyltin dioctoate, dimethyltin dineodecanoate, dioctyltin dineodecanoate, and di(n-butyl)dimethoxytin; titanic acid esters or titanium chelate compounds such as tetraisopropoxytitanium, tetra-n-butoxytitanium, tetrakis(2-ethylhexoxy)titanium, dipropoxybis(acetylacetonato)titanium, and titanium isopropoxyoctylene glycol; zinc naphthenate, zinc stearate, zinc 2-ethyloctoate; aluminum alcoholates such as aluminum isopropylate and aluminum secondary butyrate; aluminum chelate compounds such as aluminum alkyl acetate diisopropylate and aluminum bisethyl acetoacetate monoacetylacetonate; organometallic compounds such as bismuth(III) neodecanoate, bismuth(III) 2-ethylhexanoate, bismuth(III) citrate, bismuth octylate, iron 2-ethylhexoate, cobalt 2-ethylhexoate, manganese 2-ethylhexoate, and cobalt naphthenate; and lower fatty acid salts of alkali metals such as potassium acetate, sodium acetate, and lithium oxalate. The metal base catalysts are not limited to the foregoing. The metal base catalysts may be used alone or in admixture.

Notably, since blending any of the catalysts other than the tin catalysts achieves equivalent curability and cured physical properties to the tin catalysts, it is preferred from the aspect of environmental protection to blend the other catalysts rather than the tin catalysts.

Component (C) is blended in the first pack. The amount of component (C) blended is 0.01 to 5 parts by weight, preferably 0.05 to 4 parts by weight, more preferably 0.1 to 3 parts by weight per 100 parts by weight of components (A) and (A') combined. If the amount of component (C) blended is less than 0.01 part by weight, the composition is not fully curable, giving rise to the problem of retarded cure speed. If the amount of component (C) blended exceeds 5 parts by weight, the composition cures so fast that the permissible range of the working time after application may be narrowed or the mechanical properties of the cured rubber be degraded.

### [Component (D): Cure accelerator]

Component (D) is an organic compound having a primary amino group (i.e., amino group having -NH₂ structure, exclusive of guanidyl). It is an optional component and reacts with a cyclic ketone compound resulting from hydrolysis of component (B) to create water whereby the deep-section cure of the composition is significantly improved. Component (D) is not particularly limited as long as it has a primary amino group. Examples include aliphatic amines such as methylamine, ethylamine, butylamine, pentylamine, hexylamine, heptylamine, octylamine, nonylamine, and dodecylamine; aliphatic polyamines such as ethylene diamine and triethylene tetramine; aromatic amines such as aniline; cyclic amines such as cyclopentylamine, cyclohexylamine and 2-ethylcyclohexylamine; primary amino-containing silane coupling agents such as aminosilanes, e.g., γ-aminopropyltrimethoxysilane, γ-aminopropyltriethoxysilane, and [3-(2-aminoethylamino)propyl]trimethoxysilane (also known as N-2-(aminoethyl)-3-aminopropyltrimethoxysilane); and primary amino-containing organosilicon compounds such as primary amino-containing polysiloxanes. These compounds may be used alone or in admixture.

When used, component (D) may be blended in the first pack or the second pack or both. The amount of component (D) blended in each of the first and second packs is preferably 0 to 5 parts by weight (provided that 0.1 part by weight or more in at least either one of the first and second packs), more preferably 0 to 4 parts by weight (provided that 0.1 part by weight or more in at least either one of the first and second packs) per 100 parts by weight of components (A) and (A') combined. Also, when is used, the total amount of component (D) in the composition is preferably 0.1 to 10 parts by weight, more preferably 0.1 to 5 parts by weight, even more preferably 0.4 to 4 parts by weight per 100 parts by weight of components (A) and (A') combined. If the total amount of component (D) is less than 0.1 part by weight, the amount of water formed by reaction with a cyclic ketone compound resulting from hydrolysis of component (B) is small, failing to achieve sufficient deep-section cure. A total amount of component (D) in excess of 10 parts by weight is undesirable in view of the cured properties and storage stability.

### [Component (E): Inorganic filler]

In the two-pack RT fast-curing resin composition, (E) an inorganic filler may be blended if necessary. The inorganic filler as component (E) is a reinforcing or non-reinforcing filler for imparting rubber physical properties to the two-pack RT fast-curing resin composition. Examples of the inorganic filler as component (E) include hydrophobically surface-treated or untreated, silica-base fillers, e.g., dry silicas such as fired silica and fumed silica, and wet silicas such as precipitated silica and sol-gel method silica, carbon black, talc, bentonite, surface treated or untreated calcium carbonate, zinc carbonate, magnesium carbonate, surface treated or untreated calcium oxide, zinc oxide, magnesium oxide, aluminum oxide, and aluminum hydroxide. Of these, calcium carbonate, fumed silica, precipitated silica, carbon black, and aluminum oxide are preferred. Hydrophobically surface-treated forms of inorganic fillers such as calcium carbonate, fumed silica, precipitated silica, carbon black, and aluminum oxide are more preferred. Preferably, these inorganic fillers have a low water content.

The type and amount of the surface treating agent or hydrophobizing agent and the treating method are not particularly limited. Typically, treating agents including organosilicon compounds such as chlorosilane, alkoxysilanes, and organosilazanes, fatty acids, paraffins, silane coupling agents, and titanium coupling agents are applicable.

The inorganic filler as component (E) may be used alone or in admixture.

When used, component (E) may be blended in the first pack or the second pack or both. The amount of component (E) blended in each of the first and second packs is preferably 0 to 1,000 parts by weight (provided that 0.1 part by weight or more in at least either one of the first and second packs), more preferably 0 to 500 parts by weight (provided that 0.1 part by weight or more in at least either one of the first and second packs) per 100 parts by weight of components (A) and (A') combined. Also, when used, the total amount of component (E) in the composition is preferably 0.1 to 2,000 parts by weight, more preferably 0.1 to 1,000 parts by weight, even more preferably 1 to 500 parts by weight per 100 parts by weight of components (A) and (A') combined. If component (E) is used in an amount of more than 2,000 parts by weight, the composition builds up its viscosity to disturb working and the rubber strength after curing lowers, failing to gain rubber elasticity.

### [Component (F): Adhesion accelerator]

Component (F) is an adhesion accelerator. It is an optional component and is used for imparting sufficient adhesion to a cured product of the two-pack RT fast-curing resin composition. Any well-known adhesion accelerators may be used. Suitable adhesion accelerators include silane coupling agents such as functional group-containing hydrolyzable silanes (excluding component (B) and the primary amino group-containing silane coupling agents described as cure accelerator (D)). Examples include vinyl silane coupling agents, (meth)acrylic silane coupling agents, epoxy silane coupling agents, mercapto silane coupling agents, and isocyanate silane coupling agents. Exemplary are vinyltris(β-methoxyethoxy)silane, γ-methacryloxypropyltrimethoxysilane, β-(3,4-epoxycyclohexyl)ethyltrimethoxysilane, γ-glycidoxypropyltrimethoxysilane, γ-glycidoxypropylmethyldiethoxysilane, γ-mercaptopropyltrimethoxysilane, and (3-isocyanatopropyl)triethoxysilane.

Of these, (meth)acrylsilanes such as γ-methacryloxypropyltrimethoxysilane and γ-acryloxypropyltrimethoxysilane, epoxysilanes such as γ-glycidoxypropyltrimethoxysilane and β-(3,4-epoxycyclohexyl)ethyltrimethoxysilane, and isocyanate silanes such as (3-isocyanatopropyl)triethoxysilane are more preferred.

When used, component (F) may be blended in the first pack or the second pack or both. The amount of component (F) blended in each of the first and second packs is preferably 0 to 5 parts by weight (provided that 0.1 part by weight or more in at least either one of the first and second packs), more preferably 0 to 3 parts by weight (provided that 0.2 part by weight or more in at least either one of the first and second packs) per 100 parts by weight of components (A) and (A') combined. Also, when used, the total amount of component (F) in the composition is preferably 0.1 to 10 parts by weight, more preferably 0.1 to 5 parts by weight, even more preferably 0.3 to 3 parts by weight per 100 parts by weight of components (A) and (A') combined. The adhesion accelerator need not be used if adhesion is possible without using the adhesion accelerator, depending on the inorganic filler and adherend.

### [Other components]

The two-pack RT fast-curing resin composition contains components (A), (A'), (B), and (C) as essential components, and preferably further contains components (D), (E), and (F). Besides, well-known additives may be blended, for example, plasticizers, pigments, dyes, antiaging agents, antioxidants, antistatic agents, flame retardants such as antimony oxide and chlorinated paraffins, mildew-proofing agents, and antibacterial agents.

Examples of the plasticizer which can be added to the two-pack RT fast-curing resin composition include dimethyl phthalate (DMP), diethyl phthalate (DEP), di-n-butyl phthalate (DBP), diheptyl phthalate (DHP), dioctyl phthalate (DOP), diisononyl phthalate (DINP), diisodecyl phthalate (DIDP), ditridecyl phthalate (DTDP), butylbenzyl phthalate (BBP), dicyclohexyl phthalate (DCHP), tetrahydrophthalate esters, dioctyl adipate (DOA), diisononyl adipate (DINA), diisodecyl adipate (DIDA), di-n-alkyl adipates, dibutyl diglycol adipate (BXA), bis(2-ethylhexyl) azelate (DOZ), dibutyl sebacate (DBS), dioctyl sebacate (DOS), dibutyl maleate (DBM), di-2-ethylhexyl maleate (DOM), dibutyl fumarate (DBF), tricresyl phosphate (TCP), triethyl phosphate (TEP), tributyl phosphate (TBP), tris(2-ethylhexyl) phosphate (TOP), tri(chloroethyl) phosphate (TCEP), trisdichloropropyl phosphate (CPP), tributoxyethyl phosphate (TBXP), tris(β-chloropropyl) phosphate (TMCPP), triphenyl phosphate (TPP), octyldiphenyl phosphate (ODP), acetyltriethyl citrate, and tributyl acetylcitrate. Also included are trimellitic acid plasticizers, polyester plasticizers, chlorinated paraffins, stearic acid plasticizers, silicone oils (non-functional organopolysiloxanes) such as straight chain dimethylpolysiloxane, polyoxypropylene glycol, acrylic resins, acrylic polymers, and petroleum base high-boiling solvents such as paraffin, naphthene, and isoparaffin base solvents. These may be used alone or in admixture.

In the two-pack RT fast-curing resin composition, an organic solvent may be used if necessary. Suitable organic solvents include aliphatic hydrocarbon compounds such as n-hexane, n-heptane, isooctane and isododecane; aromatic hydrocarbon compounds such as toluene and xylene; straight or branched siloxane oligomers such as hexamethyldisiloxane, octamethyltrisiloxane, decamethyltetrasiloxane, dodecamethylpentasiloxane, and 2-(trimethylsiloxy)-1,1,1,2,3,3,3-heptamethyltrisiloxane; and cyclic siloxane oligomers such as octamethylcyclopentasiloxane and decamethylcyclopentasiloxane. The amount of the organic solvent may be adjusted as appropriate as long as the benefits of the invention are not impaired.

### [Preparation of two-pack RT fast-curing resin composition]

The two-pack RT fast-curing resin composition of the invention consists of the first pack containing components (A), (B) and (C) and the second pack containing component (A'), but not components (B) and (C). The composition designed as two-pack type consisting of the first and second packs is improved in fast cure and deep-section cure. Since the composition is dividedly stored as the first and second packs such that the crosslinking agent as component (B) coexists with only component (A) in the first pack among the overall base polymer, the amount of the crosslinking agent necessary to acquire storage stability can be reduced from the amount necessary in one-pack RT curable resin compositions, to nearly the minimal amount necessary and sufficient for crosslinking of the overall base polymer (that is, the total amount of the base polymer after mixing of two packs). Then the curing reaction takes place at a relatively higher rate than in the one-pack RT curable resin compositions. In this way, cure (fast cure and deep-section cure) is improved. In the embodiment wherein a primary amino group-containing organic compound is added as the cure accelerator, ketimine reaction takes place between the cyclic ketone compound resulting from hydrolysis of component (B) and the primary amino group-containing organic compound as component (D) at the initial stage of cure after mixing of two packs, to create water within the system whereby hydrolysis and condensation reaction is further promoted. Then cure (fast cure and deep-section cure) is improved like the one-pack RT curable resin compositions.

The first pack is prepared by mixing the entirety of components (A), (B) and (C) and optionally portions or the entirety of components (D), (E) and (F) and other components according to the standard procedure. The second pack is prepared by mixing the entirety of component (A') and optionally remainders or the entirety of components (D), (E) and (F) and other components according to the standard procedure in a dry atmosphere until uniform.

The proportion of component (A) blended in the first pack and component (A') blended in the second pack is such that 10 to 90 parts by weight of component (A) is combined with 90 to 10 parts by weight of component (A') to total to 100 parts by weight, preferably 30 to 70 parts by weight of component (A) is combined with 70 to 30 parts by weight of component (A') to total to 100 parts by weight.

Optional components (D), (E) and (F) and other components may be blended in either the first pack or the second pack. Although these components may be blended in either one or both of the first and second packs, it is preferred that components (D), (E) and (F) be blended in the first pack and components (D) and (E) be blended in the second pack.

When component (D) is blended in the first and second packs, it is preferred in view of storage stability of the composition that component (D) be divided in a weight ratio of first pack to second pack of from 1:99 to 99:1, especially from 15:85 to 70:30.

When component (E) is blended in the first and second packs, it is preferred in view of uniformity (or ease of mixing) of the composition upon mixing of the first and second packs that component (E) be divided in a weight ratio of first pack to second pack of from 80:20 to 20:80, especially from 60:40 to 40:60.

As to the proportion of the first pack and the second pack, it is preferred in view of workability and uniformity (or ease of mixing) of the composition upon mixing of the first and second packs that the first pack (entirety) and the second pack (entirety) may be in a weight ratio of from 1:1 to 10:1, especially from 1:1 to 4:1.

As to the storage of the two-pack RT fast-curing resin composition, the first pack and the second pack, both prepared as above, are stored in a moisture-proof atmosphere.

### [Method of curing two-pack RT fast-curing resin composition]

Upon mixing the first pack and the second pack in an adequate ratio, specifically in a weight ratio of first pack to second pack of from 1:1 to 10:1, especially from 1:1 to 4:1 and allowing the mixture to stand in a RT environment (temperature 23±15°C, humidity 50±5% RH), the two-pack RT fast-curing resin composition cures in 10 minutes to 5 days. The molding method and curing conditions may be selected from the well-known methods and conditions depending on a particular composition.

The two-pack RT fast-curing resin composition is fast curable. When the composition is shaped into a sheet of 2 mm thick at 23°C and 50% RH, it cures within a short time of 60 minutes to 3 days in contrast to a normal cure time of 7 to 10 days.

Also, the two-pack RT fast-curing resin composition is deep-section curable. When the composition is cured in a glass dish of inner diameter 10 mm and depth 3 mm at 23°C and 50% RH, it cures to a deep section within a short time of about 60 minutes in contrast to a normal cure time of 5 hours.

The two-pack RT fast-curing resin composition takes care of the human body and environment because the compound released from the crosslinking agent through hydrolytic reaction upon curing is a quite safe cyclic ketone compound such as cyclobutanone or cyclopentanone. For example, cyclopentanone is quite safe because it has a flash point of 35°C which is higher than that of an alcohol compound such as methanol released from a dealcoholization type crosslinker upon curing. The two-pack RT fast-curing resin composition shows a good curing behavior when any of various well-known catalysts is used, and a cured product thereof has satisfactory adhesion.

Thus, the two-pack RT fast-curing resin composition is useful as adhesives, sealing agents, potting agents, and coating agents. The methods of using the two-pack RT fast-curing resin composition as adhesives, sealing agents, potting agents, and coating agents may be in accord with prior art well-known methods.

Suitable articles to which the composition is applied include vehicle parts, electric and electronic parts, building structures, civil engineering structures, and the like.

### EXAMPLES

Synthesis Examples, Examples and Comparative Examples are shown below for illustrating the invention although the invention is not limited thereto. The viscosity is as measured at 23°C by a rotational viscometer according to the method of JIS Z-8803. The molecular weight is determined as a number average molecular weight (Mn) versus polystyrene standards by GPC using tetrahydrofuran as the developing solvent.

In all Examples and Comparative Examples, a planetary mixer (Inoue Mfg., Inc.) was used.

### [Synthesis Example 1]

### <Synthesis of polyoxypropylene capped with silanol groups at both molecular chain ends>

A 1-L four-necked separable flask equipped with a stirrer, reflux condenser, thermometer and dropping funnel was charged with 600 g (corresponding to 0.058 mole calculated as functionality of terminal allyl groups) of polyoxypropylene capped with allyl groups at both molecular chain ends and having a Mn of 23,000 and 2.4 g of a platinum catalyst (toluene solution of Karlstedt's catalyst; Pt concentration 1 wt%). With heating and stirring, the temperature was raised to 90°C.

Then, with stirring, 19.6 g (corresponding to 0.066 mole calculated as functionality of terminal Si-H) of 1-hydroxy-octamethyltetrasiloxane (i.e., 1-hydroxy-7-hydrogen-1,1,3,3,5,5,7,7-octamethyltetrasiloxane) was added dropwise. The reaction system was held at a temperature of 90-95°C for 6 hours. At the end of reaction, the system was cooled down to RT (23°C), obtaining a silanol-endcapped polyoxypropylene, i.e., polyoxyalkylene compound having a backbone of polyoxypropylene and capped at both molecular chain ends with -(CH₂)₃-[Si(Me)₂O]₄-H), represented by formula (3) wherein R²=methyl, R³=hydrogen, a=3, c=4, Y=polyoxypropylene (amount 570 g, yield 92%, viscosity 24,000 mPa·s, Mn 24,000).

### [Synthesis Example 2]

### <Synthesis of vinyltris(1-cyclopenten-1-yloxy)silane>

A 5-L four-necked separable flask equipped with a stirrer, reflux condenser, thermometer and dropping funnel was charged with 834 g (9.9 mol) of cyclopentanone, 825 g (8.2 mol) of triethylamine, 5 g (0.05 mol) of copper(I) chloride, and 1,500 mL of hexane. While the solution was kept at a temperature of 40-60°C, 400 g (2.47 mol) of vinyltrichlorosilane was added dropwise over about 2 hours. The solution was stirred at 80°C for 12 hours, after which the resulting triethylamine hydrochloride was removed by filtration. From the filtrate, hexane was distilled off at 100°C and atmospheric pressure. Further distillation at 180°C and 300 Pa gave vinyltris(1-cyclopenten-1-yloxy)silane (amount 532 g, yield 69%). The reaction scheme is shown by the following formula [2].

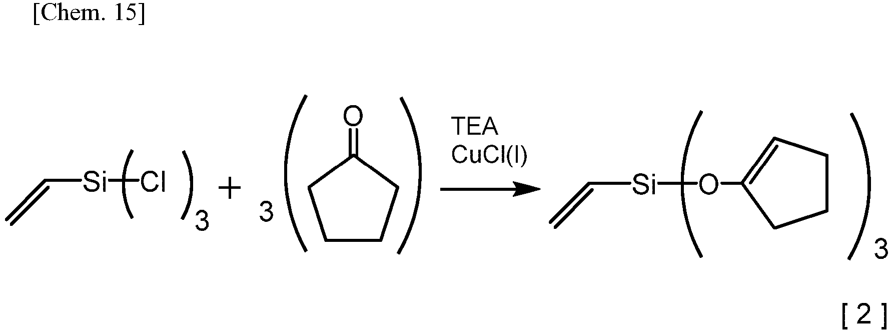

### [Example 1]

### Preparation of first pack (a)

A first pack (a) was prepared by mixing 100 parts by weight of the silanol-endcapped polyoxypropylene (viscosity 24,000 mPa·s, Mn 24,000) obtained in Synthesis Example 1 as component (A) with 10 parts by weight of dry silica (fumed silica having a BET surface area of 130 m²/g) as component (E), 7 parts by weight of vinyltris(1-cyclopenten-1-yloxy)silane as component (B), 0.8 part by weight of γ-(N,N,N',N'-tetramethylguanidyl)propyltrimethoxysilane as component (C), and 1 part by weight of γ-aminopropyltrimethoxysilane as component (D) under reduced pressure until uniform.

### Preparation of second pack (a)

A second pack (a) was prepared by mixing 100 parts by weight of the silanol-endcapped polyoxypropylene (viscosity 24,000 mPa·s, Mn 24,000) obtained in Synthesis Example 1 as component (A') with 10 parts by weight of dry silica (fumed silica having a BET surface area of 130 m²/g) as component (E) under reduced pressure until uniform.

A composition 1 was prepared by uniformly mixing the first pack (a) with the second pack (a) in a weight ratio of 1:1. Composition 1 was coated onto a substrate to a thickness of 2.5 mm. The coating was allowed to stand under conditions: 23°C and 50% RH for 1 day and 3 days for curing, obtaining cured products 1-1 and 1-2.

### [Example 2]

### Preparation of second pack (b)

A second pack (b) was prepared by mixing 100 parts by weight of the silanol-endcapped polyoxypropylene (viscosity 24,000 mPa·s, Mn 24,000) obtained in Synthesis Example 1 as component (A') with 10 parts by weight of dry silica (fumed silica having a BET surface area of 130 m²/g) as component (E) and 4 parts by weight of octylamine as component (D) under reduced pressure until uniform.

A composition 2 was prepared by uniformly mixing the first pack (a) prepared as in Example 1 with the second pack (b) in a weight ratio of 1:1. Composition 2 was coated onto a substrate to a thickness of 2.5 mm. The coating was allowed to stand under conditions: 23°C and 50% RH for 1 day and 3 days for curing, obtaining cured products 2-1 and 2-2.

### [Example 3]

### Preparation of first pack (b)

A first pack (b) was prepared by mixing 100 parts by weight of the silanol-endcapped polyoxypropylene (viscosity 24,000 mPa·s, Mn 24,000) obtained in Synthesis Example 1 as component (A) with 10 parts by weight of dry silica (fumed silica having a BET surface area of 130 m²/g) as component (E), 7 parts by weight of vinyltris(1-cyclopenten-1-yloxy)silane as component (B), 0.8 part by weight of γ-(N,N,N',N'-tetramethylguanidyl)propyltrimethoxysilane as component (C), 1 part by weight of γ-aminopropyltrimethoxysilane as component (D), and 1 part by weight of γ-glycidoxypropyltrimethoxysilane as component (F) under reduced pressure until uniform.

A composition 3 was prepared by uniformly mixing the first pack (b) with the second pack (b) prepared as in Example 2 in a weight ratio of 1:1. Composition 3 was coated onto a substrate to a thickness of 2.5 mm. The coating was allowed to stand under conditions: 23°C and 50% RH for 1 day and 3 days for curing, obtaining cured products 3-1 and 3-2.

### [Example 4]

### Preparation of first pack (c)

A first pack (c) was prepared by mixing 100 parts by weight of Kaneka MS Polymer S303H (polyoxypropylene capped at both molecular chain ends with dimethoxy(methyl)silylpropyl groups, represented by formula (2) wherein R²=R⁴=methyl, R³=hydrogen, a=3, b=2, Y=polyoxypropylene, Kaneka Corp., Mn 17,500) as component (A) with 10 parts by weight of dry silica (fumed silica having a BET surface area of 130 m²/g) as component (E), 7 parts by weight of vinyltris(1-cyclopenten-1-yloxy)silane as component (B), 0.8 part by weight of γ-(N,N,N',N'-tetramethylguanidyl)propyltrimethoxysilane as component (C), 1 part by weight of γ-aminopropyltrimethoxysilane as component (D), and 1 part by weight of γ-glycidoxypropyltrimethoxysilane as component (F) under reduced pressure until uniform.

A composition 4 was prepared by uniformly mixing the first pack (c) with the second pack (b) prepared as in Example 2 in a weight ratio of 1:1. Composition 4 was coated onto a substrate to a thickness of 2.5 mm. The coating was allowed to stand under conditions: 23°C and 50% RH for 1 day and 3 days for curing, obtaining cured products 4-1 and 4-2.

### [Comparative Example 1]

### Preparation of first pack (d)

A first pack (d) was prepared by mixing 100 parts by weight of the silanol-endcapped polyoxypropylene (viscosity 24,000 mPa·s, Mn 24,000) obtained in Synthesis Example 1 as component (A) with 10 parts by weight of dry silica (fumed silica having a BET surface area of 130 m²/g) as component (E), 5 parts by weight of vinyltrimethoxysilane instead of component (B), 0.1 part by weight of dioctyltin dilaurate as component (C), 1 part by weight of γ-aminopropyltrimethoxysilane as component (D), and 1 part by weight of γ-glycidoxypropyltrimethoxysilane as component (F) under reduced pressure until uniform.

A composition 5 was prepared by uniformly mixing the first pack (d) with the second pack (b) prepared as in Example 2 in a weight ratio of 1:1. Composition 5 was coated onto a substrate to a thickness of 2.5 mm. The coating was allowed to stand under conditions: 23°C and 50% RH for 1 day and 3 days for curing, obtaining cured products 5-1 and 5-2.

### [Comparative Example 2]

### Preparation of first pack (e)

A first pack (e) was prepared by mixing 100 parts by weight of the silanol-endcapped polyoxypropylene (viscosity 24,000 mPa·s, Mn 24,000) obtained in Synthesis Example 1 as component (A) with 10 parts by weight of dry silica (fumed silica having a BET surface area of 130 m²/g) as component (E), 7 parts by weight of vinyltris(methylethylketoxime)silane instead of component (B), 0.1 part by weight of dioctyltin dilaurate as component (C), 1 part by weight of γ-aminopropyltrimethoxysilane as component (D), and 1 part by weight of γ-glycidoxypropyltrimethoxysilane as component (F) under reduced pressure until uniform.

A composition 6 was prepared by uniformly mixing the first pack (e) with the second pack (b) prepared as in Example 2 in a weight ratio of 1:1. Composition 6 was coated onto a substrate to a thickness of 2.5 mm. The coating was allowed to stand under conditions: 23°C and 50% RH for 1 day and 3 days for curing, obtaining cured products 6-1 and 6-2.

### [Test method]

Each of the compositions prepared in Examples 1 to 4 and Comparative Examples 1 and 2 was evaluated for cure behavior, rubber physical properties and adhesion by the following methods.

### [Cure behavior]

Each of the compositions prepared in Examples 1 to 4 and Comparative Examples 1 and 2 was measured for tack-free time according to the method of JIS A-5758.

Each of the compositions prepared in Examples 1 to 4 and Comparative Examples 1 and 2 was filled in a glass dish of inner diameter 10 mm and held at 23°C and 50% RH for 60 minutes. Deep-section cure was evaluated by measuring the thickness of a portion extending from the surface in contact with air to a cured section. A sample which could be evaluated for deep-section cure after 60 minutes was regarded Pass.

### [Rubber physical properties]

Each of the compositions prepared in Examples 1 to 4 and Comparative Examples 1 and 2 immediately after preparation was extruded into a sheet of 2 mm thick, which was exposed to air at 23°C and 50% RH. The sheet was allowed to stand in the same atmosphere for 1 day and 3 days. The resulting cured products were measured for rubber physical properties (hardness, elongation at break, tensile strength) according to JIS K-6249. Notably, hardness was measured by Durometer A hardness meter according to JIS K-6249.

### [Adhesion]

Using each of the compositions prepared in Examples 1 to 4 and Comparative Examples 1 and 2, aluminum adherends of 25 mm wide and 100 mm long were bonded together over a bond area of 2.5 mm² and a bond thickness of 1 mm to form a shear adhesion specimen. The specimen was aged at 23°C and 50% RH for 1 day or 3 days. Using the specimens, their shear bond force to aluminum was measured according to the method of JIS K-6249.

Table 1 shows the test results of Examples 1 to 4 and Table 2 shows the test results of Comparative Examples 1 and 2. Tables 1 and 2 also show the compound released from the curing agent upon curing and whether or not the compound is toxic to the health and environment.

**[Table 1]**

| Test results | | Example 1 | | Example 2 | | Example 3 | | Example 4 | |
|---|---|---|---|---|---|---|---|---|---|
| Composition | | 1 | | 2 | | 3 | | 4 | |
| Cure | Tack-free time (min) | 3 | | 3 | | 3 | | 3 | |
| | Deep-section cure (mm) | 1.2 | | 2.4 | | 2.6 | | 2.7 | |
| | Judgment | Pass | | Pass | | Pass | | Pass | |
| Curing days | | 1 | 3 | 1 | 3 | 1 | 3 | 1 | 3 |
| Cured product | | 1-1 | 1-2 | 2-1 | 2-2 | 3-1 | 3-2 | 4-1 | 4-2 |
| Rubber physical properties | Hardness Type A | 22 | 24 | 26 | 28 | 26 | 27 | 28 | 28 |
| | Elongation at break (%) | 310 | 300 | 280 | 290 | 270 | 270 | 250 | 260 |
| | Tensile strength (MPa) | 1.2 | 1.4 | 1.3 | 1.5 | 1.4 | 1.4 | 1.4 | 1.5 |
| Adhesion | Shear bond force to Al (MPa) | 0.92 | 0.96 | 0.95 | 1.0 | 0.93 | 0.96 | 0.98 | 1.0 |
| Compound released upon curing | | cyclopentanone | | cyclopentanone | | cyclopentanone | | cyclopentanone | |
| Health and environment toxicity of released compound | | nil | | nil | | nil | | nil | |

**[Table 2]**

| Test results | | Comparative Example 1 | | Comparative Example 2 | |
|---|---|---|---|---|---|
| Composition | | 5 | | 6 | |
| Cure | Tack-free time (min) | 20 | | 10 | |
| | Deep-section cure (mm) | unmeasurable | | unmeasurable | |
| | Judgment | Reject | | Reject | |
| Curing days | | 1 | 3 | 1 | 3 |
| Cured product | | 5-1 | 5-2 | 6-1 | 6-2 |
| Rubber physical properties | Hardness Type A | 8 | 21 | 13 | 25 |
| | Elongation at break (%) | 360 | 300 | 300 | 320 |
| | Tensile strength (MPa) | 0.5 | 1.4 | 0.9 | 1.4 |
| Adhesion | Shear bond force to Al (MPa) | 0.27 | 0.81 | 0.61 | 0.9 |
| Compound released upon curing | | Methanol | | 2-butanone oxime | |
| Health and environment toxicity of released compound | | dangerous drug, damage to internal organs | | suspected carcinogenicity, hydrobiological toxicity | |

It is evident from the test results that two-pack RT fast-curing resin compositions within the scope of the invention (compositions of Examples 1 to 4) have excellent deep-section cure. Since the difference in rubber physical properties and adhesion strength between 1 day cured products and 3 day cured products is small, these compositions are regarded fully curable as compared with the cured form of prior art dealcoholization type composition (composition of Comparative Example 1) and the cured form of prior art deoximation type composition (composition of Comparative Example 2).

The compound released from the compositions of Examples upon curing is cyclopentanone. It is a highly safe compound in that no reports about human health toxicity (e.g., carcinogenicity or teratology) and environmental toxicity like hydrobiological toxicity are found. In contrast, the compounds released from the compositions of Comparative Examples upon curing are compounds for which health toxicity is reported in the safe data sheet (SDS) and the like, specifically 2-butanone oxime having potential carcinogenicity and hydrobiological toxicity and methanol designated as dangerous drug and having strong human body toxicity. Also, since methanol has a lower flash point and lower boiling point than cyclopentanone, two-pack RT fast-curing resin compositions within the scope of the invention are regarded excellent from the aspects of human health or safety and environmental conservation.

## Claims

1. A two-pack room temperature fast-curing resin composition comprising
a first pack containing
(A) 10 to 90 parts by weight of an organic polymer which is capped at a molecular chain end with a hydrolyzable silyl group and/or hydroxysilyl group and whose backbone is free of an organopolysiloxane structure, the total amount of components (A) and (A') being 100 parts by weight,
(B) a hydrolyzable organosilane compound having the general formula (1): 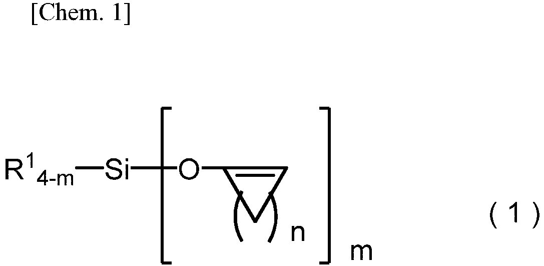
wherein R¹ is a C₁-C₁₀ monovalent hydrocarbon group, n is an integer of 1 to 8, and
m is 3 or 4, and/or
a partial hydrolytic condensate thereof, in an amount of 1 to 30 parts by weight per 100 parts by weight of components (A) and (A') combined, and
(C) a curing catalyst in an amount of 0.01 to 5 parts by weight per 100 parts by weight of components (A) and (A') combined, and
a second pack containing
(A') 10 to 90 parts by weight of an organic polymer which is capped at a molecular chain end with a hydrolyzable silyl group and/or hydroxysilyl group and whose backbone is free of an organopolysiloxane structure, the total amount of components (A) and (A') being 100 parts by weight.

2. The resin composition of claim 1, further comprising (D) a cure accelerator in the form of a primary amino group-containing organic compound, each of the first and second packs containing 0 to 5 parts by weight of the primary amino group-containing organic compound per 100 parts by weight of components (A) and (A') combined, at least one of the first and second packs containing 0.1 part by weight or more of the organic compound.

3. The resin composition of claim 1 wherein the hydrolyzable organosilane compound and/or partial hydrolytic condensate thereof as component (B) releases a cyclic ketone compound upon hydrolysis.

4. The resin composition of claim 3 wherein the released cyclic ketone compound is cyclobutanone or cyclopentanone.

5. The resin composition of claim 1 wherein the organic polymers as components (A) and (A') have a number average molecular weight of 2,000 to 50,000.

6. The resin composition of claim 1 wherein the curing catalyst (C) does not contain a tin catalyst.

7. The resin composition of claim 1, further comprising (E) an inorganic filler, each of the first and second packs containing 0 to 1,000 parts by weight of the inorganic filler per 100 parts by weight of components (A) and (A') combined, at least one of the first and second packs containing 0.1 part by weight or more of the inorganic filler.

8. The resin composition of claim 7 wherein component (E) is at least one inorganic filler selected from calcium carbonate, fumed silica, precipitated silica, carbon black and aluminum oxide.

9. The resin composition of claim 1, further comprising (F) an adhesion promoter, each of the first and second packs containing 0 to 5 parts by weight of the adhesion promoter per 100 parts by weight of components (A) and (A') combined, at least one of the first and second packs containing 0.1 part by weight or more of the adhesion promoter.

10. The resin composition of claim 1 wherein the first and second packs are blended in a weight ratio of 1:1 to 10:1.

11. A vehicle part comprising a cured product of the two-pack room temperature fast-curing resin composition of any one of claims 1 to 10.

12. An electric/electronic part comprising a cured product of the two-pack room temperature fast-curing resin composition of any one of claims 1 to 10.

13. A building structure comprising a cured product of the two-pack room temperature fast-curing resin composition of any one of claims 1 to 10.

14. A civil engineering structure comprising a cured product of the two-pack room temperature fast-curing resin composition of any one of claims 1 to 10.

15. An adhesive agent comprising the two-pack room temperature fast-curing resin composition of any one of claims 1 to 10.

16. A sealing agent comprising the two-pack room temperature fast-curing resin composition of any one of claims 1 to 10.

17. A potting agent comprising the two-pack room temperature fast-curing resin composition of any one of claims 1 to 10.

18. A coating agent comprising the two-pack room temperature fast-curing resin composition of any one of claims 1 to 10.
